# EUROPÄISCHE PATENTANMELDUNG

(11) **EP 3 339 070 A1**
(43) Veröffentlichungstag der Anmeldung: **27.06.2018**
(21) Anmeldenummer: 17205483.5
(22) Anmeldetag: 05.12.2017
(51) Int. Cl.: B60J 10/70, B60J 10/33, B60J 10/30

(54) **ABDICHTUNGSPROFIL ZUM VERBINDEN EINES ANBAUTEILS MIT EINER FAHRZEUGSCHEIBE**

(30) Priorität: 22.12.2016 DE 202016107289 U
(71) Anmelder: REHAU AG + Co, 95111 Rehau (DE)
(72) Erfinder: Schildbach, Peter, 95126 Schwarzenbach an der Saale (DE); Käppel, Dieter, 95163 Weißenstadt (DE); Erhardt, Christian, 95185 Gattendorf (DE)

(57) **Zusammenfassung**

Die vorliegende Erfindung betrifft ein Abdichtungsprofil (1) zum Verbinden eines Anbauteils (2) mit einer Fahrzeugscheibe (3) eines Kraftfahrzeuges, mit einem Halteprofil (4) aufweisend einen Halteabschnitt (5), der an der Fahrzeugscheibe (3) festlegbar oder mit dieser verbindbar ist, ein Aufnahmeabschnitt (6) zur kraft- und/oder formschlüssigen Aufnahme eines Anschlusselements (7) des Anbauteils (2), einen im Montagezustand zwischen Anbauteil (2) und Fahrzeugscheibe (3) angeordneten Stützkörper (8), ein dem Stützkörper (8) gegenüberliegender Federschenkel (9), wobei der Aufnahmeabschnitt (6) von dem Stützkörper (8) und dem Federschenkel (9) begrenzt wird, wobei der Federschenkel (9) auf seiner dem Stützkörper (8) abgewandten Seite (10) im Bereich seines freien Endes (11) wenigstens eine im Montagezustand in Richtung des Anbauteils (2) ragende und an dem Anbauteil (2) anliegende Dichtlippe (12) oder wenigstens ein im Montagezustand in Richtung des Anbauteils (2) ragenden und an dem Anbauteil (2) anliegenden Dichtungsbalg (12') aufweist.

## Beschreibung

Vorliegende Erfindung betrifft ein Abdichtungsprofil zum Verbinden eines Anbauteils mit einer Fahrzeugscheibe eines Kraftfahrzeuges, mit einem Halteprofil aufweisend
- einen Halteabschnitt, der an der Fahrzeugscheibe festlegbar oder mit dieser verbindbar ist,
- einen Aufnahmeabschnitt zur kraft- und/oder formschlüssigen Aufnahme eines Anschlusselementes des Anbauteils,
- einen im Montagezustand zwischen Anbauteil und Fahrzeugscheibe angeordneten Stützkörper,
- einen dem Stützkörper gegenüberliegenden Federschenkel, wobei der Aufnahmeabschnitt von dem Stützkörper und dem Federschenkel begrenzt wird.

Ein Abdichtungsprofil gemäß des Stands der Technik kann beispielhaft der EP 2 123 497 B1 entnommen werden. Ein derartiges Abdichtungsprofil muss sich an den Konturverlauf des unteren Rands einer Fahrzeugscheibe eines Kraftfahrzeuges anpassen, sodass es trotz eines vorgesehenen Dichtelements zwischen der Fahrzeugscheibe und dem Anbauteil zu einem Zutritt von Wasser in den Bereich des Aufnahmeabschnitts kommen kann. Da sich bei aktuellen Fahrzeugen unterhalb des Anbauteils elektronische Geräte (z.B. Steuergeräte oder Elektromotoren) sowie Batterien oder Akkumulatoren befinden können, besteht die Gefahr einer Korrosion, Beschädigung oder eines Kurzschlusses innerhalb der vorgenannten Bauteile.

Aufgabe der vorliegenden Erfindung ist es daher ein Abdichtungsprofil zum Verbinden eines Anbauteils mit einer Fahrzeugscheibe eines Kraftfahrzeuges anzugeben, welches eine erhöhte Sicherheit gegen das Eindringen von Wasser in den Bereich unterhalb des Anbauteils bietet.

Diese Aufgabe wird erfindungsgemäß gelöst durch ein Abdichtungsprofil zum Verbinden eines Anbauteils mit einer Fahrzeugscheibe eines Kraftfahrzeuges, mit einem Halteprofil aufweisend
- einen Halteabschnitt, der an der Fahrzeugscheibe festlegbar oder mit dieser verbindbar ist,
- einen Aufnahmeabschnitt zur kraft- und/oder formschlüssigen Aufnahme eines Anschlusselementes des Anbauteils,
- einen im Montagezustand zwischen Anbauteil und Fahrzeugscheibe angeordneten Stützkörper,
- einen dem Stützkörper gegenüberliegenden Federschenkel, wobei der Aufnahmeabschnitt von dem Stützkörper und dem Federschenkel begrenzt wird,
wobei erfindungsgemäß der Federschenkel auf seiner dem Stützkörper abgewandten Seite im Bereich seines freien Endes wenigstens eine im Montagezustand in Richtung des Anbauteils ragende und an dem Anbauteil anliegende Dichtlippe oder wenigstens ein im Montagezustand in Richtung des Anbauteils ragenden und an dem Anbauteil anliegenden Dichtungsbalg aufweist.

Das erfindungsgemäße Vorsehen einer Dichtlippe oder eines Dichtungsbalgs am freien Ende des Federschenkels gewährleistet im Montagezustand des Anbauteils eine zuverlässige Abdichtung des von dem Anbauteil überdeckten bzw. abgedeckten Bereichs des Kraftfahrzeuges. Die Anordnung der Dichtlippe oder des Dichtungsbalgs am freien Ende des Federschenkels bietet zudem den Vorteil, dass an dieser Stelle große Toleranzen eingehalten werden können, da die Dichtlippe bzw. der Dichtungsbalg in diesem Bereich einen großen Einfederungsweg zurücklegen können, da an dieser Stelle die Fahrzeugscheibe oder der Stützkörper den Einfederungsweg nicht beeinträchtigen.

Die Dichtlippe ist bevorzugt gerade oder bogenförmig ausgebildet.
Die Dichtlippe kann unter einem Winkel von 30° bis 75° an dem Federschenkel angebunden sein. Die Dichtlippe weist bevorzugt einen spaltfreien Übergang von dem Federschenkel zum Fuß der Dichtlippe auf.

Der Federschenkel ist bevorzugt L-förmig, U-förmig oder Hakenförmig ausgebildet.

Das Halteprofil ist bevorzugt als extrudiertes Strangpressprofil ausgebildet. Das Halteprofil besteht bevorzugt aus einem thermoplastischen polymeren Werkstoff. Der polymere Werkstoff umfasst bevorzugt ein Polyolefin, insbesondere ein Polypropylen oder ein Polyethylen. Die Dichtlippe bzw. der Dichtungsbalg besteht bevorzugt aus einem thermoplastischen Elastomer oder aus einem EM-PP oder aus Weich-PVC.

Zusätzlich kann auf dem Stützkörper eine im Montagezustand an dem Anbauteil und/oder dem Anschlusselement anliegende weitere Dichtlippe oder ein weiterer Dichtungsbalg vorgesehen sein.

Am Stützkörper kann ein Dichtungselement vorgesehen sein, dass im Montagezustand zumindest an der Fahrzeugscheibe dichtend anliegt.

Das Anbauteil ist bevorzugt ein Wasserkasten oder eine Wasserkastenabdeckung.

Teil der Erfindung ist ferner eine Abdichtungsanordnung mit
- einer Fahrzeugscheibe eines Kraftfahrzeuges,
- einem Anbauteil mit einem Anschlusselement und
- einem zwischen Fahrzeugscheibe und Anteilbau angeordneten, vorstehend beschriebenen Abdichtungsprofil zum Anschluss des Anbauteils an die Scheibe.

Im Folgenden wird die Erfindung anhand lediglich Ausführungsbeispiele darstellenden Figuren näher erläutert. Gleiche oder funktionsgleiche Elemente sind mit den gleichen Bezugszeichen versehen.

Es zeigen:
- Fig. 1:: ein Abdichtungsprofil / eine Abdichtungsanordnung vor dem Verbinden des Anbauteils mit dem Abdichtungsprofil;
- Fig. 2:: ein Abdichtungsprofil / eine Abdichtungsanordnung im Montagezustand des Anbauteils;
- Fig. 3:: ein weiteres Abdichtungsprofil / eine weitere Abdichtungsanordnung vor dem Verbinden des Anbauteils mit dem Abdichtungsprofil;
- Fig. 4:: ein Abdichtungsprofil / eine Abdichtungsanordnung im Montagezustand des Anbauteils;
- Fig. 5:: eine Variante der Dichtungslippe gemäß Fig. 1 und Fig. 2.

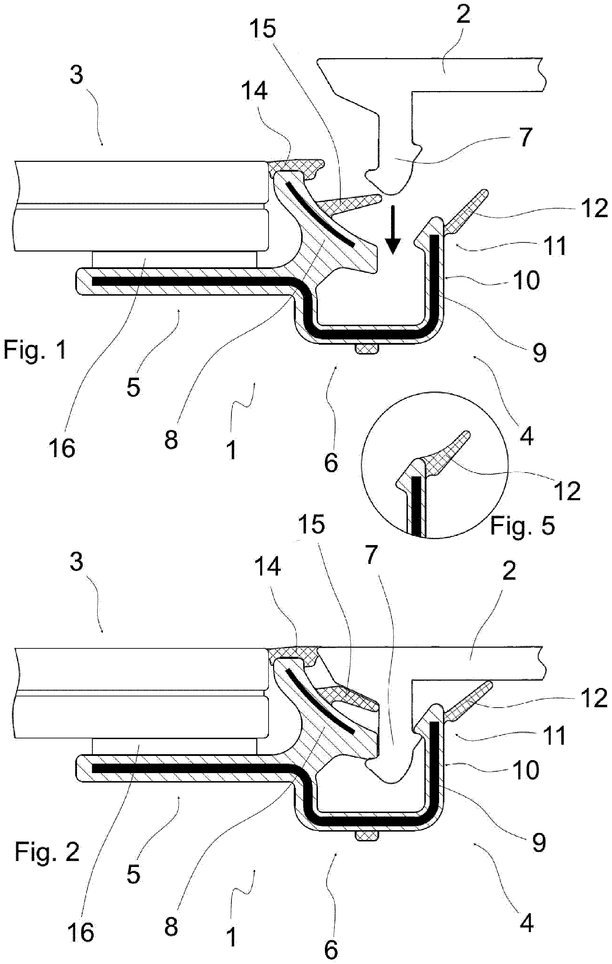

Die Fig. 1 zeigt ein Abdichtungsprofil 1 zum Verbinden eines Anbauteils 2 mit einer Fahrzeugscheibe 3 eines Kraftfahrzeuges, mit einem Halteprofil 4 aufweisen
- einen Halteabschnitt 5, der an der Fahrzeugscheibe 3 festlegbar oder mit dieser verbindbar ist,
- einen Aufnahmeabschnitt 6 zur kraft- und/oder formschlüssigen Aufnahme eines Anschlusselementes 7 des Anbauteils,
- einen im Montagezustand zwischen Anbauteil 2 und Fahrzeugscheibe 3 angeordneten Stützkörper 8,
- einen dem Stützkörper 8 gegenüberliegenden Federschenkel 9, wobei der Aufnahmeabschnitt 6 von dem Stützkörper 8 und dem Federschenkel 9 begrenzt wird.

Der Federschenkel 9 weist auf seiner dem Stützkörper 8 abgewandten Seite 10 im Bereich seines freien Endes 11 wenigstens eine im Montagezustand in Richtung des Anbauteils 2 ragende und an dem Anbauteil 2 anliegende Dichtlippe 12 auf. Die Dichtlippe 12 ist gerade ausgebildet. Die Dichtlippe 12 ist unter einem Winkel von 30° bis 75° an dem Federschenkel 9 angebunden. Der Federschenkel 9 ist U-förmig ausgebildet. Das Halteprofil 4 selbst ist als extrudiertes Strangpressprofil ausgebildet. Am Stützkörper 8 ist ein Dichtungselement 14 vorgesehen, das im Montagezustand (vgl. Fig. 2) zumindest an der Fahrzeugscheibe 3 dichtend anliegt. Zusätzlich ist auf dem Stützkörper 8 eine im Montagezustand gemäß Fig. 2 an dem Anbauteil 2 und/oder dem Anschlusselement 7 anliegende weitere Dichtlippe 15 vorgesehen. Bei dem Anbauteil 2 handelt es sich um einen Wasserkasten oder um eine Wasserkastenabdeckung. Das Abdichtungsprofil 1 ist über eine Klebstoffschicht oder ein doppelseitiges Klebeband 16 mit der Unterseite der Fahrzeugscheibe 3 verbunden. Die in den Figuren 1 und 2 dargestellte Abdichtungsanordnung umfasst eine Fahrzeugscheibe 3 eines Kraftfahrzeuges, ein Anbauteil 2 mit einem Anschlusselement 7 und eine zwischen Fahrzeugscheibe 3 und Anbauteil 2 angeordnetes Abdichtungsprofil 1, wie vorstehend beschrieben, zum Anschluss des Anbauteils 2 an der Scheibe 3.

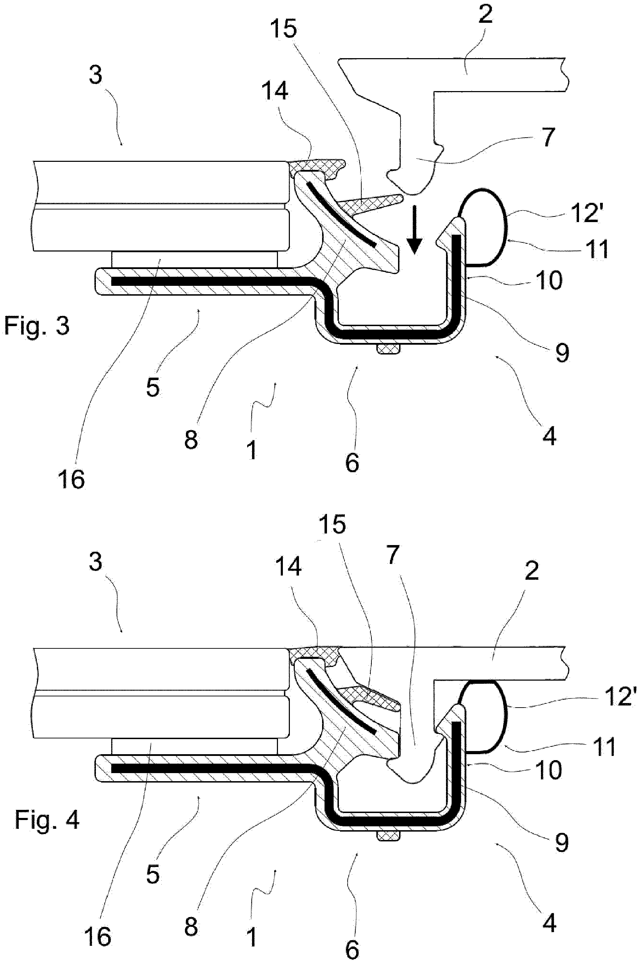

Das Abdichtungsprofil 1 und die Abdichtungsanordnung gemäß der Fig. 3 und Fig. 4 unterscheiden sich von dem Abdichtungsprofil 1 und der Abdichtungsanordnung gemäß der Fig. 1 und Fig. 2 lediglich dahingehend, dass der Federschenkel 9 Anstelle einer Dichtlippe auf seiner dem Stützkörper 8 abgewandten Seite 10 im Bereich seines freien Endes 11 wenigstens ein im Montagezustand in Richtung des Anbauteils 2 ragenden und an dem Anbauteil 2 anliegenden Dichtungsbalg 12' aufweist.

In Fig. 5 ist eine Variante der Dichtlippe 12 gemäß der Fig. 1 und Fig. 2 dargestellt, wobei diese Dichtlippe 12 einen spaltfreien Übergang von dem Federschenkel 9 zum Fuß der Dichtlippe 12 aufweist. Ein Spalt bedingt ansonsten die Gefahr, dass bei der Montage des Anschlusselementes 7, selbiges in dem Spalt hängenbleibt und nicht in den Aufnahmeabschnitt 6 gelangt. Der spaltfreie Übergang ermöglicht es, dass die Dichtlippe 12 zusätzlich als Einführschräge für das Anschlusselement 7 fungiert.

## Patentansprüche

1. Abdichtungsprofil (1) zum Verbinden eines Anbauteils (2) mit einer Fahrzeugscheibe (3) eines Kraftfahrzeuges, mit einem Halteprofil (4) aufweisend
- einen Halteabschnitt (5), der an der Fahrzeugscheibe (3) festlegbar oder mit dieser verbindbar ist,
- ein Aufnahmeabschnitt (6) zur kraft- und/oder formschlüssigen Aufnahme eines Anschlusselements (7) des Anbauteils (2),
- einen im Montagezustand zwischen Anbauteil (2) und Fahrzeugscheibe (3) angeordneten Stützkörper (8),
- ein dem Stützkörper (8) gegenüberliegender Federschenkel (9), wobei der Aufnahmeabschnitt (6) von dem Stützkörper (8) und dem Federschenkel (9) begrenzt wird,
**dadurch gekennzeichnet,**
**dass** der Federschenkel (9) auf seiner dem Stützkörper (8) abgewandten Seite (10) im Bereich seines freien Endes (11) wenigstens eine im Montagezustand in Richtung des Anbauteils (2) ragende und an dem Anbauteil (2) anliegende Dichtlippe (12) oder wenigstens ein im Montagezustand in Richtung des Anbauteils (2) ragenden und an dem Anbauteil (2) anliegenden Dichtungsbalg (12') aufweist.

2. Abdichtungsprofil (1) nach Anspruch 1, **dadurch gekennzeichnet, dass** die Dichtlippe (12) gerade oder bogenförmig ausgebildet ist.

3. Abdichtungsprofil (1) nach einem der vorstehenden Ansprüche, **dadurch gekennzeichnet, dass** die Dichtlippe (12) unter einem Winkel von 30° bis 75° an dem Federschenkel (9) angebunden ist.

4. Abdichtungsprofil (1) nach einem der vorstehenden Ansprüche, **dadurch gekennzeichnet, dass** der Federschenkel (9) L-förmig, U-förmig oder Hakenförmigen ausgebildet ist.

5. Abdichtungsprofil (1) nach einem der vorstehenden Ansprüche, **dadurch gekennzeichnet, dass** das Halteprofil (4) als extrudiertes Strangpressprofil ausgebildet ist.

6. Abdichtungsprofil (1) nach einem der vorstehenden Ansprüche, **dadurch gekennzeichnet, dass** am Stützkörper (8) ein Dichtungselement (14) vorgesehen ist, das im Montagezustand zumindest an der Fahrzeugscheibe (3) dichtend anliegt.

7. Abdichtungsprofil (1) nach einem der vorstehenden Ansprüche, **dadurch gekennzeichnet, dass** zusätzlich auf dem Stützkörper (8) eine im Montagezustand an dem Anbauteil (2) und/oder dem Anschlusselement (7) anliegende weitere Dichtlippe (15) vorgesehen ist.

8. Abdichtungsprofil (1) nach einem der vorstehenden Ansprüche, **dadurch gekennzeichnet, dass** das Anbauteil (2) ein Wasserkasten oder eine Wasserkastenabdeckung ist.

9. Abdichtungsanordnung mit
- einer Fahrzeugscheibe (3) eines Kraftfahrzeugs,
- einem Anbauteil (2) mit einem Anschlusselement (7) und
- einem zwischen Fahrzeugscheibe (3) und Anbauteil (2) angeordneten Abdichtungsprofil (1) nach einem der Ansprüche 1 bis 8 zum Anschluss des Anbauteils (2) an die Scheibe (3).
